# EUROPÄISCHE PATENTSCHRIFT

(11) **EP 4 105 001 B1**
(45) Veröffentlichungstag und Bekanntmachung des Hinweises auf die Patenterteilung: **23.10.2024**
(21) Anmeldenummer: 21179680.0
(22) Anmeldetag: 16.06.2021
(51) Int. Cl.: B29C 53/58, B29C 39/10, B29C 53/60, B29C 70/20, B29C 70/68, B32B 1/08, F16L 9/133

(54) **VERFAHREN ZUR HERSTELLUNG EINES FASERVERBUND-HOHLKÖRPERS MIT AUSKLEIDUNG**
METHOD OF MANUFACTURING A FIBRE COMPOSITE HOLLOW BODY WITH CLADDING
PROCÉDÉ DE FABRICATION D'UN CORPS CREUX COMPOSITE FIBREUX À DOUBLAGE

(43) Veröffentlichungstag der Anmeldung: 21.12.2022
(73) Patentinhaber: FiberSol GmbH, 20148 Hamburg (DE)
(72) Erfinder: STÖTZEL, Michael, 57271 Hilchenbach (DE)
(74) Vertreter: Glawe, Delfs, Moll

(56) Entgegenhaltungen:
- WO-A1-89/03761
- WO-A2-99/57471
- US-A1- 2018 214 914

## Beschreibung

Gegenstand der vorliegenden Erfindung ist ein Wickelverfahren zur Herstellung eines mit einer Auskleidung ausgestatteten Faserverbund-Hohlkörpers.

Aus dem Stand der Technik ist es bekannt, mit Hilfe von Wickelverfahren Faserverbund-Hohlkörper herzustellen, die insbesondere rohrförmig ausgestaltet sein können und sich für den Transport von Gasen oder Flüssigkeiten eignen. Ein mit einem Matrixmaterial getränktes Faserhalbzeug wird dabei auf einen drehbar angetriebenen Formkern aufgewickelt. Nach dem Erhärten des Matrixmaterials entsteht ein rohrförmiger Faserverbund-Hohlkörper, der vom Formkern gelöst werden kann. Während das Matrixmaterial dem Faserverbund-Hohlkörper seine Form verleiht, dienen die darin eingebetteten Fasern zur Verstärkung und verleihen dem Rohr eine hohe mechanische Stabilität.

Ein Nachteil von Faserverbundwerkstoffen ist ihre oftmals mangelnde chemische Widerstandsfähigkeit. Insbesondere die im Faserverbundwerkstoff enthaltenen Fasern stellen Angriffspunkte dar, die der chemischen Beständigkeit abträglich sind. Beim Transport von chemisch aggressiven Medien ist es daher üblich, das Faserverbundrohr mit einer die Innenwand des Faserverbundwerkstoffs schützenden Auskleidung auszustatten, welche frei von Faserverstärkungen ist.

Aus dem Stand der Technik ist es grundsätzlich bekannt, ein vorgefertigtes Rohr aus einem chemisch beständigen Kunststoff (wie beispielsweise PET oder PE) herzustellen und das vorgefertigte Rohr nachträglich mit einem Faserverbundwerkstoff zu umwickeln. Das vorgefertigte Rohr wird dazu in eine Wickelanlage eingespannt, in der es um seine Längsachse rotiert wird, um ein in ein Matrixmaterial getränktes Faserhalbzeug auf das Rohr aufzuwickeln. Grundsätzlich bekannt ist es aus dem Stand der Technik zudem, ein vorgefertigtes aus einem Faserverbundwerkstoff bestehendes Rohr nachträglich mit einer chemisch beständigen Innenbeschichtung auszukleiden. Aus der WO 9957471 A3 ist die Herstellung eines Faserverbund-Hohlkörpers gemäss dem Oberbegriff des Hauptanspruchs bekannt. J

Ausgehend von diesem Stand der Technik ist es die Aufgabe der vorliegenden Erfindung, ein Wickelverfahren zur Herstellung eines mit einer Auskleidung ausgestatteten Faserverbund-Hohlkörpers bereitzustellen, welches bei geringerem Aufwand einen Faserverbund-Hohlkörper mit verbesserter Qualität liefert.

Gelöst wird diese Aufgabe mit den Merkmalen des unabhängigen Anspruchs.

Vorteilhafte Ausführungsformen sind in den Unteransprüchen angegeben.

Ein erfindungsgemäßes Wickelverfahren zur Herstellung eines mit einer Auskleidung ausgestatteten Faserverbund-Hohlkörpers ist in Anspruch 1 definiert. Es umfasst unter anderem umfasst die nachfolgenden Schritte:
a) Aufbringen eines aushärtbaren Auskleidungsmaterials auf einen drehbar antreibbaren Formkern;
b) Aufbringen eines aushärtbaren Matrixmaterials auf eine Außenfläche der Auskleidung;
d) Aufwickeln eines Faserhalbzeugs zur Herstellung eines Faserverbund-Hohlkörpers, bei dem das Faserhalbzeug in das aushärtbare Matrixmaterial eingebettet ist;
e) Lösen des mit der Auskleidung ausgestatteten Faserverbund-Hohlkörpers vom Formkern.

Zunächst werden einige im Rahmen der vorliegenden Beschreibung verwendete Begriffe erläutert. Der Formkern weist regelmäßig eine Längsachse auf, um die herum er rotiert werden kann. Beispielsweise kann der Formkern zylinderförmig ausgebildet sein.

Das aushärtbare Auskleidungsmaterial ist ein Material, welches nach dem Aushärten eine chemisch beständige Auskleidung bildet, die den Faserverbund-Hohlkörper und insbesondere das im Matrixmaterial vorhandene Fasermaterial vor chemisch aggressiven Medien wie beispielsweise Laugen schützt. Es kann insbesondere in einer flüssigen Form auf den Formkern aufgebracht werden, so dass es an diesem anhaftet und eine Auskleidungsschicht bildet. Die durch das Auskleidungsmaterial gebildete Auskleidung ist frei von Faserverstärkungen.

Das Auskleidungsmaterial kann im ausgehärteten Zustand eine Zugfestigkeit aufweisen, die geringer ist als eine Zugfestigkeit des Matrixmaterials im ausgehärteten Zustand ohne Faserverstärkungen, wobei die Zugfestigkeit des Auskleidungsmaterials im Bereich zwischen 10 und 45 N/mm², vorzugsweise zwischen 15 und 30 N/mm² liegen kann, jeweils bestimmt nach DIN 53504. Eine hohe Zugfestigkeit des Auskleidungsmaterials ist nicht erforderlich, da die Stabilität durch den um die Auskleidung gewickelten Faserverbund-Hohlkörper erzielt wird.

Das Auskleidungsmaterial kann in einer Ausführungsform im ausgehärteten Zustand eine Härte aufweisen (beispielsweise Shore A oder Shore D), die geringer ist als die Härte des Materixmaterials (ohne Faserverstärkungen). Insbesondere kann eine Shore A Härte des Auskleidungsmaterials im ausgehärteten Zustand zwischen 50 und 150, vorzugsweise zwischen 80 und 120 liegen. Beispielsweise kann eine Shore D Härte des Auskleidungsmaterials im ausgehärteten Zustand zwischen 20 und 90, vorzugsweise zwischen 35 und 70, weiter vorzugsweise zwischen 45 und 60 liegen.

Eine Bruchdehnung (bestimmt nach DIN 53504) des Auskleidungsmaterials im ausgehärteten Zustand ist vorzugsweise höher als eine Bruchdehnung des Matrixmaterials im ausgehärteten Zustand ohne Faserverstärkungen. Beispielsweise kann die Bruchdehnung des Auskleidungsmaterials im ausgehärteten Zustand zwischen 5 und 500%, vorzugsweise zwischen 10 und 400% liegen. Die höhere Bruchdehnung des Auskleidungsmaterials verleiht der Auskleidung gegenüber dem Faserverbundmaterial eine größere Beständigkeit (beispielsweise bei thermischer Expansion und Kontraktion) .

Eine Dichte des Auskleidungsmaterials kann im ausgehärteten Zustand im Bereich zwischen 1 und 1,4 g/cm³, vorzugsweise zwischen 1,1 und 1,3 g/cm³, weiter vorzugsweise zwischen 1,1 und 1,2 g/cm³ liegen.

Beim aushärtbaren Matrixmaterial kann es sich um ein beliebiges Material handeln, dass sich bei der Herstellung eines Faserverbundwerkstoffs dazu eignet, eine die Fasern einbettende Matrix zu bilden. Insbesondere kann es sich um ein aushärtbares Harz handeln. Das Harz ist vorzugsweise ein ungesättigtes Polyesterharz oder ein Vinylesterharz.

Ungesättigte Polyesterharze (UP-Harze) sind Kunstharze, die Lösungen von ungesättigten Polyestern in einem Vinylmonomer sind. Geeignete ungesättigte Polyesterharze sind aus dem Stand der Technik bekannt. Die ungesättigten, unvernetzten Polyester werden durch Polykondensation von mindestens einem Diol und mindestens einer Verbindung ausgewählt aus Dicarbonsäuren, deren Anhydriden und Gemischen hiervon erhalten. Geeignete Diole sind beispielsweise ausgewählt aus 1,2-Propandiol, Ethylenglycol, Diethylenglycol, 1,3-Butandiol, 1,4-Butandiol und Gemische hiervon. Geeignete Dicarbonsäuren sind beispielsweise ausgewählt aus Fumarsäure, Maleinsäure, Maleinsäureanhydrid, Tetrahydrophtalsäure und Gemische hiervon. Geeignete Anhydride sind beispielsweise ausgewählt aus Phthalsäureanhydrid, Isophthalsäure, Adipinsäure und Gemische hiervon. Geeignete Vinylmononere sind insbesondere Styrol und Methacrylsäuremethylester.

Vinylesterharze (VE-Harze) sind Kunstharze, die im ausgehärteten Zustand duroplastische Kunststoffe bilden. Sie bestehen vorzugsweise aus einem Prepolymer mit zwei oder mehr Acryl- oder Methacrylatgruppen und einem Vinylmonomer. Das Prepolymer kann durch Veresterung von Epoxidharzen mit Acryl- oder Methacrylsäuren hergestellt werden. Bei dem Vinylmonomer handelt es sich vorzugsweise um Styrol. Geeignete Vinylesterharze sind im Stand der Technik bekannt. Vinylesterharze basierend auf Bisphenol-A-Epoxidharz, vorzugsweise gelöst in Styrol, sind bevorzugt. Ein besonders bevorzugtes Vinylesterharz ist beispielsweise "Vipel^{®} F013-AAB-00 Vinylesterharz" der "Firma AOC" .

VE-Harze unterscheiden sich von den UP-Harzen insbesondere dadurch, dass bei ersten die reaktionsfähigen C=C-Doppelbindungen nur endständig am Prepolymer auftreten und bei der Härtung der Harze zu einer weniger engmaschigen Vernetzung führen.

Die Härtung der Harze kann durch UV-Härtung mittels Photoinitiatoren oder über eine radikalische Kettenpolymerisation mit einem geeigneten Initiator oder Initiatorsystem erfolgen, wobei letzteres bevorzugt ist. Durch die Härtung bildet sich ein vernetztes Copolymer aus dem unvernetzten Polyester bzw. Prepolymer und dem Vinylmonomer. Geeignete Initiatoren der radikalischen Kettenpolymerisation können Peroxide, vorzugsweise Dibenzoylperoxid und Methylethylketonperoxid, weiter vorzugsweisen Methylethylketonperoxid sein. Durch den Zusatz von Beschleunigern, vorzugsweise Cobalt(II)salzen, weiter vorzugsweise Cobalt(II)2-ethylhexanoat, können die Reaktionen bereits bei Raumtemperatur ablaufen (sog. Kalthärtung). Der Beschleuniger wird vorzugsweise als eine 0,01 bis 15%ige, weiter vorzugsweise eine 0,5 bis 10%ige, noch vorzugsweiser eine 1%ige Cobalt(II)-Lösung zu dem Reaktionsgemisch gegeben.

Das aushärtbare Maxtrixmaterial kann in seiner ausgehärteten Form ohne Faserverstärkung eines oder mehrere der folgenden Merkmale aufweisen: eine Zugfestigkeit von 50 bis 150 MPa, vorzugsweise von 60 und 120 MPa, weiter vorzugsweise von 75 bis 100 MPa, gemessen nach der ISO Methode ISO 527-2; ein Zugmodul von 1,5 bis 6 GPa, vorzugsweise von 2 bis 5 GPa, weiter vorzugsweise von 2,8 bis 3,6 GPa, gemessen nach der ISO Methode ISO 527-2; eine Zugdehnung von 3 bis 10 %, vorzugsweise von 4,5 bis 8,5 %, gemessen nach der ISO Methode ISO 527-2; eine Biegefestigkeit von 100 bis 250 MPa, vorzugsweise von 110 bis 200, weiter vorzugsweise von 120 bis 180 MPaMPa, gemessen nach der ISO Methode ISO 178; einen Biegemodul von 2 bis 6 GPa, vorzugsweise von 2,5 bis 5 GPa, weiter vorzugsweise von 3 bis 4,4 GPa, gemessen nach der ISO Methode ISO 178; eine Erweichungstemperatur von 80 bis 250°C, vorzugsweise von 90 bis 200°C, weiter vorzugsweise von 100 bis 130°C, gemessen bei 264 psi nach der Methode ISO 75-A; einen linearer Ausdehnungskoeffizient von 30 bis 150 10⁻⁶ / K, vorzugsweise von 40 bis 100 10⁻⁶ / K, weiter vorzugsweise von 50 bis 70 10⁻⁶ / K, gemessen bei 25 bis 100°C; und eine Barcolhärte von 20 bis 60, vorzugsweise von 25 bis 45, gemessen nach DIN EN 59.

Im Rahmen der Erfindung wurde erkannt, dass der bei Wickelverfahren üblicherweise verwendete drehbar angetriebene Formkern bereits vor dem eigentlichen Wickelvorgang dazu verwendet werden kann, um eine Auskleidung herzustellen. Durch die Drehbarkeit des Formkerns kann ein insbesondere flüssiges Auskleidungsmaterial auf einfache und gleichmäßige Weise auf den Formkern appliziert werden, um nach der Aushärtung eine Auskleidung gewünschter Dicke zu bilden. Nach dem Auftragen und vorzugsweise nach dem Aushärten des Auskleidungsmaterials kann die auf dem Formkern befindliche Auskleidung mit einem Faserverbundwerkstoff umwickelt werden. Eine vorherige Herstellung eines separaten Auskleidungsrohres, das nach der Herstellung zu einer Wickelanlage transportiert und in die Wickelanlage eingebaut werden muss, ist entsprechend nicht mehr erforderlich. Der Transport- und Logistikaufwand des erfindungsgemäßen Verfahrens ist daher deutlich reduziert. Darüber hinaus hat sich gezeigt, dass durch die Aufbringung des Auskleidungsmaterials auf den Formkern eine Auskleidung mit qualitativ hochwertiger Innenfläche und insbesondere mit einer geringen Rauheit erzeugt werden kann. Insbesondere gegenüber einer nachträglich auf ein vorgefertigtes Rohr aufgebrachten Innenbeschichtung (beispielsweise durch Aufsprühen eines Beschichtungsmaterials) ist die Qualität der Innenfläche deutlich beim erfindungsgemäßen Verfahren deutlich verbessert.

In einer bevorzugten Ausführungsform wird vor dem Aufbringen des Auskleidungsmaterials eine Trennschicht auf den Formkern aufgebracht. Die Trennschicht kann insbesondere durch eine den Formkern umgebende Trennfolie gebildet sein. Die Trennschicht ist vorzugsweise aus einem gegenüber dem Auskleidungsmaterial chemisch beständigen Material gebildet. Trennmittel können Lösemittel- und/oder Wasser-basierte Polymertrennmittel oder Semi-permanente Trennmittel mit hoher Gleiteigenschaft sein. Bevorzugt ist die Trennfolie aus Polyethylenterephthalat (PET). Dies vereinfacht das Lösen des mit der Auskleidung ausgestatteten Faserverbund-Hohlkörpers vom Formkern sowie das Entfernen der Trennschicht von der Auskleidung. Durch die Verwendung einer Trennschicht kann zudem die Qualität der Innenfläche der Auskleidung weiter verbessert werden. Insbesondere kann eine im Formkern gegebenenfalls vorhandene Rauheit durch die Trennschicht abgedeckt bzw. geglättet werden, so dass die Rauheit der Auskleidungsinnenfläche deutlich reduziert wird. Die Trennschicht kann eine Dicke zwischen 5 µm und 500 µm, vorzugsweise zwischen 20 µm und 250 µm, weiter vorzugsweise zwischen 40 µm und 150 µm haben.

Erfindungsgemäss wird der Formkern während der Ausbringung des Auskleidungsmaterials um seine Längsachse rotiert, wobei das Aufbringen des Auskleidungsmaterials weiter vorzugsweise durch eine Bewegung von zumindest einer Ausbringöffnung entlang einer Längsrichtung des Formkerns erfolgt. Die Bewegung erfolgt vorzugsweise parallel zur Längsrichtung. Ein Abstand der Ausbringungsöffnung zur Oberfläche des Formkerns kann beispielsweise zwischen 10 cm und 100 cm, vorzugsweise zwischen 20 cm und 50 cm liegen. Der Vorschub der Düse entlang der Längsrichtung, die Rotationsgeschwindigkeit des Formkerns, sowie der Volumenstrom des ausgebrachten Auskleidungsmaterials können auf den Durchmesser des Formkerns sowie die Trocknungszeit des Auskleidungsmaterials abgestimmt werden, um eine Auskleidung gewünschter Schichtdicke herzustellen.

In einer bevorzugten Ausführungsform bildet das Auskleidungsmaterial nach dem Aushärten eine Auskleidung, die Polyharnstoff, Polyurethan oder Gemische hiervon umfasst oder die daraus besteht. Vorzugsweise umfasst oder besteht die Auskleidung aus einer Beschichtung aus Polyharnstoff, weiter vorzugsweise 2K-Polyharnstoff. Geeignete Beschichtungen aus Polyharnstoff, Polyurethan und Gemischen hiervon (sog. Hybridbeschichtung) sind aus dem Stand der Technik hinreichend bekannt. Eine besonders geeignete Polyharnstoffbeschichtung ist beispielsweise Polyurea PA136T von PULTEX. Vorzugsweise erfolgt die Herstellung der Beschichtung bzw. der Auskleidung ausgehend von Mehrkomponentensystemen, insbesondere Zweikomponentensystemen. Dieses bedeutet, dass die die Auskleidung bildende Beschichtung aus Polyharnstoff, Polyurethan oder Hybridbeschichtung vorzugsweise durch das Mischen einer ersten Ausgangskomponente und einer zweiten Ausgangskomponente hergestellt wird. Die erste Ausgangskomponente umfasst dabei mindestens ein Isocyanat oder ein Gemisch aus verschiedenen Isocyanaten und die zweite Ausgangskomponente umfasst mindestens ein Amin und/oder mindestens ein Diol oder Polyol. Eine Mischung aus Aminen und Diolen bzw. Polyolen führt zu der Bildung von Hybridbeschichtungen. Geeignete Isocycanate, Amine, Diole und Polyole sind aus dem Stand der Technik bekannt. Geeignete Isocyanate sind insbesondere Diisocycanate, wie beispielsweise Hexamethylendiisocyanat, Toluoldiisocyanat, Methylendi(phenylisocyanat), Diphenylmethandiisocyanat, Naphthylendiisocyanat, Isophorondiisocyanat, Diisocyanatodicyclohexylmethan und o-(p-Isocyana-tobenzyl)phenylisocyanat. Geeignete Amine sind insbesondere aliphatische und aromatische Mono-, Di- und Triamine, wie beispielsweise Polypropylendiamin, 2,4-Diamino-3,5-diethyltoluol, Glycerylpolyoxypropylentriamin und 3-Aminopropyltriethoxysilan. Vorzugsweise kann die zweite Ausgangskomponente die weiteren Bestandteile wie Füllstoffe, Additive usw. enthalten. Beispielsweise kann als erste Ausgangskomponente zur Herstellung eines Polyharnstoffes "Rocathaan Hotspray PA 136-T/05 base" der "Firma PULTEX, GmbH, Simmerath" und als zweite Ausgangskomponente "Rocathaan Hotspray PA 136-T/05 hardener" der "Firma PULTEX, GmbH, Simmerath" verwendet werden. Die Ausgangskomponenten sind vorzugsweise derart ausgestaltet, dass sie die Polyharnstoffbeschichtung, die Polyurethanbeschichtung oder die Hybridbeschichtung durch Polyaddition ausbilden. Es hat sich gezeigt, dass sich Beschichtungen aus Polyharnstoff, Polyurethan oder Hybridbeschichtungen, welche zuvor auf einen rotierenden Formkern aufgebracht wurden, besonders dazu eignen, eine chemisch beständige Auskleidung eines Faserverbund-Hohlkörpers zu bilden.

Die Ausgangskomponenten können vor der Ausbringung vermischt werden und anschließend auf den Formkern aufgebracht werden.

In einer Ausführungsform kann vorgesehen sein, dass die Ausgangskomponenten unter Druck derart in eine Mischkammer eingebracht werden, dass sie innerhalb der Mischkammer aufeinander treffen und sich miteinander mischen (Pressure-Impingement-Mischverfahren). Weiterhin kann vorgesehen sein, dass die Ausgangskomponenten mit einem gewünschten Ausbringungsdruck aus der Mischkammer austreten und auf den Formkern aufgesprüht werden. Eine Dosierung der Ausgangskomponenten ist vorzugsweise druckgesteuert. Vorzugsweise liegt der Ausbringungsdruck der vermischten Ausgangskomponenten zwischen 80 bar und 400 bar, weiter vorzugsweise zwischen 120 bar und 300 bar, noch weiter vorzugsweise zwischen 180 bar und 220 bar. Es hat sich gezeigt, dass es bei diesem Ausbringungsdruck aufgrund der hohen mechanischen Energie beim Auftreffen der Ausgangskomponenten zu einer guten Vermischung der Ausgangskomponenten sowie zu einem glatten und homogenen Spritzbild kommt, wodurch die Bildung einer hochwertigen und durchgängigen Auskleidungsschicht begünstigt wird.

Eine Ausbringungstemperatur der Ausgangskomponenten kann zwischen 30°C und 120°C liegen, vorzugweise zwischen 50°C und 100°C, weiter vorzugweise zwischen 60°C und 90°C. Ein Volumenstrom des auf den Formkern aufgebrachten Auskleidungsmaterials kann beispielsweise zwischen 0,5 l/min und 20 l/min liegen, vorzugsweise zwischen 1 l/min und 12 l/min, weiter vorzugsweise zwischen 2 l/min und 7 l/min. Eine Schichtdicke der Auskleidung kann zwischen 0,5 mm und 20 mm, vorzugsweise zwischen 1 mm und 10 mm, weiter vorzugsweise zwischen 2 mm und 5 mm liegen. Eine Trocknungszeit einer Lage des Auskleidungsmaterials (also einer während einer vollständigen Umdrehung des Formkerns aufgebrachten Schicht) kann zwischen 1 und 300s, bevorzugt zwischen 1 und 120s, weiter bevorzugt zwischen 5 und 30s liegen. Die Ausbringungsöffnung kann entlang einer Längsrichtung des Formkerns bewegt werden, wobei eine Hauptaustrittsrichtung der Ausbringöffnung mit der Längsrichtung des Formkerns einen Winkel einschließt, der zwischen 5° und 70°, vorzugsweise zwischen 15° und 50°, weiter vorzugsweise zwischen 25° und 35° liegt.

In einer alternativen Ausführungsform können die Ausgangskomponenten zur Bildung eines gießfähigen Gemisches ausgestaltet sein. Das gießfähige Gemisch kann eine Viskosität (gemessen nach DIN EN ISO 2431:2011) von mehr als 200 mPas, vorzugsweise von mehr als 1000 mPas, weiter vorzugsweise von mehr als 3000 mPas aufweisen.

Es kann in den vorstehenden Fällen vorgesehen sein, dass die Vermischung der Ausgangskomponenten in einem Statikmischer mittels mechanischer Mischelemente, beispielsweise durch Rührelemente, erfolgt. Vorzugsweise werden die vermischten Komponenten über die Ausbringöffnung auf den Formkern gegossen. Zur Dosierung der ausgebrachten Menge kann ein Dosier-Förderer, beispielsweise eine Zahnradpumpe vorgesehen sein. Die Dosierung ist vorzugsweise volumengesteuert.

Bevorzugt werden die auf den Formkern gegossenen vermischten Ausgangskomponenten anschließend mittels mechanischer Verteilelemente, beispielsweise mittels eines Rakels oder eines Fellrollers, gleichmäßig über die Oberfläche des Formkerns verteilt. Die Verwendung mechanischer Verteilelemente ist allerdings nicht zwingend erforderlich. Möglich ist auch, dass das gießfähige Gemisch ohne die Verwendung mechanischer Verteilelemente aufgebracht wird, beispielsweise mittels einer Breitschlitzdüse.

Eine Lage des auf diese Weise verteilten Beschichtungsmaterials kann beispielsweise zwischen 0,1 mm und 10 mm, vorzugsweise zwischen 0,5 mm und 7 mm, weiter vorzugsweise zwischen 0,7 mm und 6 mm betragen.

Ein Ausgießdruck der vermischten Ausgangskomponenten kann zwischen 1 und 100 bar, vorzugsweise zwischen 2 und 50 bar, weiter vorzugsweise zwischen 2 und 20 bar liegen. Eine Trocknungszeit einer Lage des Auskleidungsmaterials (also einer während einer vollständigen Umdrehung des Formkerns aufgebrachten Schicht) kann zwischen 20 s und 360 s, bevorzugt zwischen 25 s und 240 s, weiter bevorzugt zwischen 30 s und 120 s liegen. Eine Ausbringungstemperatur der Ausgangskomponenten kann zwischen 10°C und 80°C und vorzugweise zwischen 15° und 30°C liegen.

In einer Ausführungsform wird vor dem Aufbringen des aushärtbaren Matrixmaterials ein Haftvermittler auf das Auskleidungsmaterial aufgebracht. Geeignete Haftvermittler, sogenannte Primer oder Haftprimer, sind aus dem Stand der Technik bekannt. Bevorzugte Haftvermittler sind lösungsmittelhaltige Polyurethanformulierungen. Die als Haftvermittler eingesetzten Formulierungen umfassen vorzugsweise mindestens ein Polyisocyanat, und mindestens ein Lösungsmittel. Vorzugsweise ist das mindestens eine Polyisocyanat ausgewählt aus aliphatischen, alicyclischen und aromatischen Diisocyanaten, Triisocyanaten und Tetraisocyanaten. Weiter vorzugsweise handelt es sich bei dem mindestens einem Polyisocyanat um ein Diisocyanat, noch weiter vorzugsweise um ein aromatisches Diisocyanat, wie Diphenylmethandiisocyanat. Vorzugsweise weisen geeignete Lösungsmittel einen niedrigen Dampfdruck, vorzugsweise einen Dampfdruck <150 mbar, weiter vorzugsweise <100 mbar bei 20°C auf. Dieses ermöglicht, dass das Lösungsmittel oder das Lösungsmittelgemisch nach einem ersten Aufbringen auf das Auskleidungsmaterial verdunsten kann. Bevorzugte Lösungsmittel sind z.B. 2-Methoxy-1-methylethylacetat, Ethylacetat und Gemische hiervon. Der Anteil an Lösungsmittel beträgt vorzugsweise 30 bis 95 Gew.-%, weiter vorzugsweise 35 bis 85 Gew.-%, noch weiter vorzugsweise 40 bis 75 Gew.-%, bezogen auf die Gesamtmasse der als Haftvermittler eingesetzten Formulierung. Durch einen hohen Lösungsmittelanteil in der Formulierung des Haftvermittlers entsteht eine sehr hohe Haftung, insbesondere von Polyurethan und/oder Polyharnstoffbeschichtungen zu dem im Faserhalbzeug enthaltenden Matrixmaterial. Der Anteil an Polyisocyanat beträgt vorzugsweise 40 bis 80 Gew.-%, weiter vorzugsweise 50 bis 65 Gew.-%, bezogen auf die Gesamtmasse der als Haftvermittler eingesetzten Formulierung. Es hat sich gezeigt, dass durch das Lösungsmittel die ggf. bereits gehärtete Oberfläche der Auskleidung aktiviert wird und das Polyisocyanat eine gute Verbindung mit einem nachfolgend aufgetragenen Matrixmaterial ermöglicht. Der Haftvermittler kann in einem Zeitraum von 20 Minuten bis zu 24 Stunden nach dem Aufbringen oder Aushärten des Auskleidungsmaterials aufgebracht werden. Vorzugsweisen wird der Haftvermittler bereits nach 20 Minuten auf das Auskleidungsmaterial aufgebracht. Eine anschließende Verarbeitung des Matrixmaterials erfolgt dann vorzugsweise innerhalb von 6 Stunden. Überraschenderweise hat sich gezeigt, dass der Haftvermittler auch nach mehreren Monaten eine Haftung zu dem Auskleidungsmaterial aufbaut. Ein besonders geeigneter Haftvermittler ist zum Beispiel "PULODUR Haftvermittler 02 HV" der "Firma Pultex, GmbH, Simmerath". Der Formkern kann während des Aufbringens des Haftvermittlers rotiert werden. Vorzugsweise wird der Haftvermittler zudem mittels einer Anpresseinrichtung, beispielsweise mittels einer mit dem rotierenden Formkern mitlaufenden Anpressrolle an das Auskleidungsmaterial angepresst. Eine Ablauffläche der Anpressrolle besteht bevorzugt aus einem gegenüber dem Haftvermittler chemisch inertem Material, beispielsweise kann sie aus Nylon bestehen.

Das Aufbringen des aushärtbaren Matrixmaterials auf eine Außenfläche des Auskleidungsmaterials gemäß Schritt b) und das Aufwickeln eines Faserhalbzeugs gemäß Schritt c) können dadurch erfolgen, dass ein mit Matrixmaterial getränktes Faserhalbzeug auf den Formkern aufgewickelt wird.

Alternativ können das Aufbringen des aushärtbaren Matrixmaterials auf eine Außenfläche des Auskleidungsmaterials gemäß Schritt b) und das Aufwickeln eines Faserhalbzeugs gemäß Schritt c) dadurch erfolgen, dass eine Schicht des aushärtbaren Matrixmaterials aufgebracht wird, wobei nach dem Aufbringen der Schicht des aushärtbaren Matrixmaterials das Faserhalbzeug in das noch nicht ausgehärtete Matrixmaterial eingebettet wird. Die aufgebrachte Schichtdicke des aushärtbaren Matrixmaterials kann in diesem Fall zwischen 0,2 mm und 3 mm liegen und liegt vorzugsweise zwischen 0,5 mm und 1,5 mm.

Es kann vorgesehen sein, dass ein zur Aushärtung des Matrixmaterials geeignetes Härtungsmittel dem Matrixmaterial vor dem Aufbringen beigemischt wird, wobei das Aufbringen anschließend innerhalb einer vorgegebenen Topfzeit erfolgt.

Es ist regelmäßig vorgesehen, dass einer ersten Wickellage bestehend aus dem Matrixmaterial und darin eingebetteten Faserhalbzeug weitere Wickellagen hinzugefügt werden. Die Art und Anzahl der Wickellagen kann auf grundsätzlich aus dem Stand der Technik bekannte Weise angepasst werden, um eine gewünschte Wandstärke sowie eine gewünschte Festigkeit des Faserverbund-Hohlkörpers zu erreichen. Eine bevorzugte Wandstärke des Faserverbund-Hohlkörpers kann zwischen 0,5 mm und 50 mm, vorzugsweise zwischen 1 mm und 30 mm liegen. Das Verfahren eignet sich grundsätzlich dazu, mit einer Auskleidung ausgestattete Faserverbundhohlkörper mit einer beliebigen Nennweite (Innendurchmesser der Auskleidung) herzustellen. Die Nennweite kann beispielsweise zwischen 1,5 cm und 200 cm liegen. Die Gesamtwandstärke des mit der Auskleidung ausgestatteten Faserverbund-Hohlkörpers ergibt sich aus der Dicke der Auskleidung und der Wandstärke des Faserverbund-Hohlkörpers.

Das Faserhalbzeug kann beispielsweise eines oder mehrere der nachfolgenden Elemente aufweisen: ein Roving, ein Gewebe, ein Gelege, ein Multiaxialgelege, eine Matte, ein Vlies und/oder ein Gewirk. Grundsätzlich kommen für das Faserhalbzeug alle gängigen Arten von Fasermaterialien in Frage, wobei die Verwendung von Glasfasern bevorzugt ist.

Das Faserhalbzeug einer ersten Wickellage (welche unmittelbar an die Auskleidung angrenzt) umfasst vorzugsweise ein Roving, das weiter vorzugsweise radial (also im Wesentlichen senkrecht zur Formkernachse) aufgewickelt ist. Beim Radial-Roving sind also entlang der Axialrichtung des Formkerns eine Vielzahl von den Formkern umfänglich (um 360°) umgebende Rovingabschnitte unmittelbar angrenzend nebeneinander positioniert. Das Roving kann mit Gelege oder Gewebe-Einlagen verstärkt sein. Es hat sich gezeigt, dass durch die Verwendung eines solchen Radial-Rovings die Verbindung zur Auskleidung verbessert werden kann.

Insbesondere kommt es bei der Aushärtung zu einer Schrumpfung des Rovingmaterials entlang seiner Längsrichtung, was zu einer Verbesserung der Haftung zwischen der Auskleidung und dem Faserverbund-Hohlkörper führt. Insbesondere bei kleinen Nennweiten (Innendurchmessern der Auskleidung), beispielsweise im Bereich zwischen 25 mm und 80 mm, kann die erste Wickellage auch eine Lage Komplexband (Kombination aus einem Fasergewebe und einer Fasermatte ("Nonwoven")) sein, wobei die Kettfäden des Gewebes radial ausgerichtet sind.

In einer Wickellage können mehrere Faserhalbzeugarten zum Einsatz kommen. Insbesondere können auch verschiedene Wickellagen verschiedene Faserhalbzeugarten aufweisen.

In einer Ausführungsform der Erfindung wird eine Außenfläche des Faserverbund-Hohlkörpers mit einer Beschichtung aus Polyharnstoff, Polyurethan oder Gemischen hiervon versehen. Durch eine solche Außenbeschichtung wird auch die Außenfläche des Faserverbund-Hohlkörpers vor chemischen Angriffen geschützt. Der Formkern kann während der Ausbringung des Beschichtungsmaterials um seine Längsachse rotiert werden, wobei das Aufbringen des Beschichtungsmaterials vorzugsweise durch eine Bewegung von zumindest einer Ausbringdüse entlang einer Längsrichtung des Formkerns erfolgt. Dabei können der Vorschub der Düse entlang der Längsrichtung, die Rotationsgeschwindigkeit des Formkerns, sowie der Volumenstrom des ausgebrachten Beschichtungsmaterials auf den Durchmesser des Faserverbund-Hohlkörpers sowie die Trocknungszeit des Beschichtungsmaterials abgestimmt werden, um eine Beschichtung gewünschter Schichtdicke herzustellen. Die äußere Beschichtung kann insoweit auf ähnliche Weise hergestellt werden, wie die vorstehend beschriebene Auskleidung. Der zusätzliche Aufwand zur Herstellung der Außenbeschichtung ist daher gering.

In einer bevorzugten Ausführungsform wird die Außenfläche vor dem Aushärten einer äußeren Schicht des Matrixmaterials und vor dem Auftragen der Beschichtung aus Polyharnstoff, Polyurethan oder Gemischen hiervon mit einer haftverbessernden Struktur versehen. Die haftverbessernde Struktur wird vorzugsweise hergestellt durch ein Umwickeln der Außenfläche mit einem Abreißgewebe sowie durch ein anschließendes Entfernen des Abreißgewebes. Das Abreißgewebe weist vorzugsweise eine Struktur oder Rauheit auf, die auf das noch nicht ausgehärtete Matrixmaterial der äußeren Wickellage übertragen wird. Die äußere Wickellage wird vorzugsweise vor dem Entfernen des Abreißgewebes gehärtet. Anschließend kann die Beschichtung aus Polyharnstoff, Polyurethan oder Gemischen hiervon aufgebracht werden.

Gegenstand der Offenbarung ist weiterhin ein mit einer Auskleidung ausgestatteter Faserverbundhohlkörper, der durch ein erfindungsgemäßes Verfahren erhältlich ist.

Gegenstand der Offenbarung ist zudem ein Faserverbund-Hohlkörper, der mit einer inneren Auskleidung ausgestattet ist, die einen Polyharnstoff, Polyurethan oder Gemische hiervon umfasst oder daraus besteht.

Die vorstehend genannten mit einer Auskleidung ausgestatteten Faserverbundhohlkörper können durch weitere im Rahmen der vorliegenden Beschreibung erläuterte Merkmale fortgebildet werden.

Eine vorteilhafte Ausführungsform der Erfindung wird nachfolgend anhand eines Beispiels erläutert.

### Beispiel:

Die Herstellung eines mit einer 2K-Polyharnstoff-Auskleidung ausgestatteten Faserverbund-Rohres erfolgt bei einer Umgebungstemperatur von etwa 20°C bei einer Luftfeuchtigkeit von etwa 50%. Um eine Nennweite (Innendurchmesser) des Faserverbund-Rohres von etwa 5 cm zu erzielen, wird ein Formkern (Dorn) bereitgestellt, dessen Außendurchmesser 5 cm beträgt.

Der Formkern wird zunächst mit einer aus Polyethylenterephthalat bestehenden Trennfolie umwickelt, die eine Stärke von 100 µm aufweist. Die Trennfolie deckt im Formkern gegebenenfalls vorhandene Unebenheiten ab und weist selbst eine sehr geringe Rauheit auf. Anschließend wird mittels einer automatischen Sprüheinrichtung eine Mischung aus einer ersten und einer zweiten Ausgangskomponenteauf die Trennfolie aufgebracht, wobei der Formkern gleichzeitig um seine Längsachse rotiert wird. Die erste Ausgangskomponente umfasst eine Mischung von Isocyanaten, genauer genommen ein Gemisch aus 1,1'-Diphenylmethandiisocyanat (Prepolymer), 4,4-Diphenylmethandiisocyanat, 4,4'-Diphenylmethandiisocyanat (Oligomere) sowie einer Reaktionsmasse von 4,4 'Methylendiphenyldiisocyanat und o-(p-Iso-cyanatobenzyl)phenylisocyanat. Beispielsweise kann als erste Ausgangskomponente "Rocathaan Hotspray PA 136-T/05 base" der "Firma PULTEX, GmbH, Simmerath" verwendet werden. Die zweite Ausgangskomponente umfasst ein Gemisch aus Polyoxypropylendiamin, 2,4-Diamino-3,5-diethyltoluol, Glcerylpolypropylentriamin, Tris(2-chlor-1-methylethyl) und 3-Aminopropyltriethoxysilan . Beispielsweise kann als zweite Ausgangskomponente "Rocathaan Hotspray PA 136-T/05 hardener" der "Firma PULTEX, GmbH, Simmerath" verwendet werden.

Die Sprüheinrichtung umfasst eine in einem Abstand von 35 cm zur Oberfläche des Formkerns angeordnete Ausbringungsdüse, deren Hauptaustrittsrichtung mit der Längsachse einen Winkel von 30° einschließt. Die Mischung der Ausgangskomponenten weist eine Temperatur von 80° auf und wird zur Ausbringung mit einem Druck von 200 bar beaufschlagt. Der Vorschub der Ausbringungsdüse entlang der Längsrichtung beträgt 120 mm pro Umdrehung.

Die Aushärtungszeit der Polyharnstoffbeschichtung pro Lage beträgt etwa 5 bis 10 s. Nach Erreichen einer gewünschten Schichtdicke von 2,5 mm ist die Aufbringung des Auskleidungsmaterials abgeschlossen. Die Dicke des Auskleidungsmaterials kann angepasst werden, indem der Sprühvorgang über einen längeren Zeitraum fortgesetzt wird und so eine größere Anzahl an Polyharnstofflagen aufgespritzt werden.

Nach der Aushärtung der Auskleidung wird ein Haftvermittler auf eine Außenfläche des Auskleidungsmaterials aufgebracht. Der Haftvermittler umfasst ein Polyisocyanat sowie einen hohen Anteil an einem Lösungsmittelgemisch. Bei dem Haftvermittler handelt es sich beispielsweise um "PULODUR Haftvermittler 02 HV" der "Firma Pultex, GmbH, Simmerath". Dieser Haftvermittler eignet sich insbesondere für die Haftvermittlung einer Beschichtung eines Faserverbundwerkstoffs mit einer Beschichtung aus Polyharnstoff. Der Haftvermittler wird manuell mittels einer Sprühpistole auf die Außenfläche der Auskleidung bestehend aus einer Beschichtung aus Polyharnstoff aufgebracht. Alternativ kann dies natürlich auch mittels einer automatischen Sprüheinrichtung erfolgen. Der Formkern ist bei der Auftragung des Haftvermittlers in Rotation versetzt. Der Haftvermittler wird mit einem Flächengewicht von etwa 100g/m² aufgebracht.

Zur besseren Vernetzung des Haftvermittlers mit der Polyharnstoff-Auskleidung sowie zur gleichmäßigen Verteilung des Haftvermittlers wird eine Anpresseinrichtung verwendet, die in einem geringen Abstand zum Formkern mit diesem mitläuft und dabei den Haftvermittler an die Beschichtung aus Polyharnstoff anpresst. Die Anpresseinrichtung weist eine aus Nylon bestehende Pressfläche auf.

Nach einer Trocknungszeit von etwa 30 Minuten wird der Faserverbundwerkstoff aufgebracht. Dazu wird zunächst eine etwa 0,5 bis 1 mm dicke Schicht eines Vinylesterharzes aufgebracht, welche als Haftschicht dient. Bei dem Vinylesterharz handelt es sich um einen, basierend auf Bisphenol-A-Epoxidharz gelöst in Styrol, wie er beispielsweise als "Vipel^{®} F013-AAB-00 Vinylesterharz" von der "Firma AOC" erhältlich ist. Nach Zusatz des Peroxid-Initiator Methylethylketonperoxid setzt eine radikalische Copolymerisation des Styrols und des ungesättigten Prepolymers und somit die Härtung des Harzes ein. Als Beschleuniger der Härtungsreaktion wird zusätzlich Cobalt(II)2-(II)2-ethylhexanoat in Form einer 1%igen Lösung zugegeben.

In die noch nicht ausgehärtete Harzschicht wird als erste Lage ein Komplexband, insbesondere eine "ECR-Kombimatte 600g" der "Firma Mühlheimer Composites, Bärnau", mit einem Flächengewicht von 600 g/m² gewickelt. Anschließend werden vier Lagen Glasseidenband (mit einem Flächengewicht von 280 g/m²) gewickelt. Dies geschieht auf grundsätzlich bekannte Weise durch ein Wickelverfahren, bei dem der Formkern mit der darauf befindlichen Auskleidung in Rotation versetzt wird.

Die Art des Faserhalbzeugs sowie die Anzahl der Wickellagen kann auf grundsätzlich aus dem Stand der Technik bekannte Weise angepasst werden, um eine gewünschte Wandstärke des Faserverbundrohres sowie eine gewünschte mechanische Festigkeit zu erreichen.

Vor dem Aushärten der Harzschicht einer äußeren Wickellage wird die Außenfläche des Rohrs mit einem Abreißgewebe umwickelt. Das Abreißgewebe wird anschließend entfernt, so dass eine Struktur des Abreißgewebes auf das noch nicht ausgehärtete Harz der äußeren Wickellage übertragen wird. Die äußere Wickellage wird vor dem Entfernen des Abreißgewebes gehärtet. Anschließend wird eine Beschichtung aus Polyharnstoff auf die Außenfläche des Faserverbundrohres aufgebracht. Das Auftragen der Polyharnstoffbeschichtung erfolgt auf analoge Weise zu dem oben beschriebenen Auftragen des Auskleidungsmaterials. Die Dicke der Außenbeschichtung beträgt 2,5 mm.

Nach dem Aushärten der Außenbeschichtung wird der mit der Auskleidung sowie mit einer Außenbeschichtung ausgestattete Faserverbund-Hohlkörper vom Formkern entformt. Hilfreich ist dabei, dass die Trennfolie sich leicht lösen lässt sowohl vom Formkern als auch von der Polyharnstoffauskleidung. Durch die Trennfolie entsteht zudem eine Auskleidungsinnenfläche mit sehr geringer Rauhigkeit.

## Patentansprüche

1. Wickelverfahren zur Herstellung eines mit einer Auskleidung ausgestatteten Faserverbund-Hohlkörpers, umfassend die nachfolgenden Schritte:
- Aufbringen eines aushärtbaren Auskleidungsmaterials auf einen drehbar antreibbaren Formkern;
- Aufbringen eines aushärtbaren Matrixmaterials auf eine Außenfläche der Auskleidung;
- Aufwickeln eines Faserhalbzeugs zur Herstellung eines Faserverbund-Hohlkörpers, bei dem das Faserhalbzeug in das aushärtbare Matrixmaterial eingebettet ist;
- Lösen des mit der Auskleidung ausgestatteten Faserverbund-Hohlkörpers vom Formkern,
wobei das Auskleidungsmaterial nach dem Aushärten eine Auskleidung bildet, die einen Polyharnstoff, Polyurethan oder Gemische hiervon umfasst, wobei das Auskleidungsmaterial aus zumindest zwei Ausgangskomponenten gebildet ist, die zur Bildung eines gießfähigen Gemisches miteinander vermischt und auf den Formkern gegossen werden, **dadurch gekennzeichnet, dass** der Formkern während der Aufbringung des Auskleidungsmaterials um seine Längsachse rotiert wird.

2. Verfahren gemäß Anspruch 1, bei dem vor dem Aufbringen des Auskleidungsmaterials eine Trennschicht auf den Formkern aufgebracht wird, wobei die Trennschicht vorzugsweise durch eine den Formkern umgebende Trennfolie aufweist.

3. Verfahren gemäß einem der Ansprüche 1 oder 2, bei dem das Aufbringen des Auskleidungsmaterials vorzugsweise durch eine Bewegung von zumindest einer Ausbringöffnung entlang einer Längsrichtung des Formkerns erfolgt.

4. Verfahren gemäß einem der Ansprüche 1 bis 3, bei dem das Auskleidungsmaterial nach dem Aushärten eine Auskleidung bildet, die aus einem Polyharnstoff, Polyurethan oder Gemischen hiervon besteht.

5. Verfahren gemäß einem der Ansprüche 1 bis 4, bei dem ein Ausgießdruck der vermischten Ausgangskomponenten zwischen 1 und 100 bar, vorzugsweise zwischen 2 und 50 bar, weiter vorzugsweise zwischen 2 und 20 bar liegt.

6. Verfahren gemäß einem der Ansprüche 1 bis 5, bei dem die auf den Formkern gegossenen Ausgangskomponenten mittels mechanischer Verteilelemente gleichmäßig über die Oberfläche des Formkerns verteilt werden.

7. Verfahren gemäß einem der Ansprüche 1 bis 6, bei dem eine Trocknungszeit einer Lage des Auskleidungsmaterials liegt zwischen 20 s und 360 s, bevorzugt zwischen 25 s und 240 s, weiter bevorzugt zwischen 30 s und 120 s.

8. Verfahren gemäß einem der Ansprüche 1 bis 7, bei dem eine Ausbringungstemperatur der Ausgangskomponenten zwischen 10°C und 80°C und vorzugweise zwischen 15° und 30°C liegt.

9. Verfahren gemäß einem der Ansprüche 1 bis 8, bei dem das Auskleidungsmaterial im ausgehärteten Zustand eine Bruchdehnung aufweist, die höher ist als eine Bruchdehnung des Matrixmaterials im ausgehärteten Zustand ohne Faserverstärkungen und/oder bei dem das Auskleidungsmaterial im ausgehärteten Zustand eine Zugfestigkeit aufweist, die geringer ist als eine Zugfestigkeit des Matrixmaterials im ausgehärteten Zustand ohne Faserverstärkungen.

10. Verfahren gemäß einem der Ansprüche 1 bis 9, bei dem eine Schichtdicke der Auskleidung zwischen 0,5 mm und 20 mm, vorzugsweise zwischen 1 mm und 10 mm, weiter vorzugsweise zwischen 2 mm und 5 mm liegt.

11. Verfahren gemäß einem der Ansprüche 1 bis 10, bei dem vor dem Aufbringen des aushärtbaren Matrixmaterials ein Haftvermittler auf das Auskleidungsmaterial aufgebracht wird, wobei der Haftvermittler vorzugsweise mindestens ein Polyisocyanat und mindestens ein Lösungsmittel umfasst, wobei der Formkern weiter vorzugsweise während des Aufbringens des Haftvermittlers rotiert wird, wobei der Haftvermittler vorzugsweise mittels einer Anpresseinrichtung, weiter vorzugsweise mittels einer mit dem rotierenden Formkern mitlaufenden Anpressrolle an das Auskleidungsmaterial angepresst wird.

12. Verfahren gemäß einem der Ansprüche 1 bis 11, bei dem das Aufbringen des aushärtbaren Matrixmaterials gemäß Schritt b) und das Aufwickeln eines Faserhalbzeugs gemäß Schritt c) dadurch erfolgen, dass ein mit Matrixmaterial getränktes Faserhalbzeug auf den Formkern aufgewickelt wird.

13. Verfahren gemäß einem der Ansprüche 1 bis 11, bei dem das Aufbringen des aushärtbaren Matrixmaterials auf eine Außenfläche des Auskleidungsmaterials gemäß Schritt b) und das Aufwickeln eines Faserhalbzeugs gemäß Schritt c) dadurch erfolgen, dass eine Schicht des aushärtbaren Matrixmaterials aufgebracht wird, wobei nach dem Aufbringen das Faserhalbzeug in das noch nicht ausgehärtete Matrixmaterial eingebettet wird, wobei eine Schichtdicke vorzugsweise zwischen 0,2 mm und 3 mm, weiter vorzugsweise zwischen 0,5 mm und 1,5 mm liegt.

14. Verfahren gemäß einem der Ansprüche 1 bis 13, bei dem eine Wandstärke des Faserverbund-Hohlkörpers zwischen 0,5 mm und 50 mm, vorzugsweise zwischen 1 mm und 30 mm liegt.

15. Verfahren gemäß einem der Ansprüche 1 bis 14, bei dem eine Außenfläche des Faserverbund-Hohlkörpers mit einer Beschichtung aus Polyharnstoff, Polyurethan oder Gemischen hiervon versehen wird, wobei vorzugsweise die Außenfläche vor dem Aushärten einer äußeren Schicht des Matrixmaterials und vor dem Auftragen der Beschichtung aus Polyharnstoff, Polyurethan oder Gemischen hiervon mit einer haftverbessernden Struktur versehen wird, wobei die haftverbessernde Struktur weiter vorzugsweise hergestellt wird durch ein Umwickeln der Außenfläche mit einem Abreißgewebe sowie durch ein anschließendes Entfernen des Abreißgewebes.

## Claims

1. Wrapping method for production of a hollow fibre composite body equipped with a lining, comprising the following steps:
- applying a curable lining material to a rotatably driveable mould core;
- applying a curable matrix material to an outer surface of the lining;
- wrapping with a semifinished fibre product for production of a hollow fibre composite body, in which the semifinished fibre product is embedded into the curable matrix material;
- detaching the hollow fibre composite body equipped with the lining from the mould core,
wherein the lining material after curing forms a lining comprising a polyurea, polyurethane or mixtures thereof, wherein the lining material is formed from at least two starting components that are mixed with one another to form a castable mixture and are cast onto the mould core, **characterized in that** the mould core is rotated about its longitudinal axis during the application of the lining material.

2. Method according to Claim 1, in which application of the lining material is preceded by application of a separating layer to the mould core, wherein the separating layer preferably has a separating film surrounding the mould core.

3. Method according to either of Claims 1 and 2, in which the lining material is preferably applied by a movement of at least one output opening in a longitudinal direction of the mould core.

4. Method according to any of Claims 1 to 3, in which the lining material after curing forms a lining consisting of a polyurea, polyurethane or mixtures thereof.

5. Method according to any of Claims 1 to 4, in which an output casting pressure of the mixed starting components is between 1 and 100 bar, preferably between 2 and 50 bar, further preferably between 2 and 20 bar.

6. Method according to any of Claims 1 to 5, in which the starting components cast onto the mould core are distributed uniformly over the surface of the mould core by means of mechanical distribution elements.

7. Method according to any of Claims 1 to 6, in which a drying time of a ply of the lining material is between 20 s and 360 s, preferably between 25 s and 240 s, further preferably between 30 s and 120 s.

8. Method according to any of Claims 1 to 7, in which an output temperature of the starting components is between 10°C and 80°C, and preferably between 15°C and 30°C.

9. Method according to any of Claims 1 to 8, in which the lining material in the cured state has an elongation at break higher than an elongation at break of the matrix material in the cured state without fibre reinforcements and/or in which the lining material in the cured state has a tensile strength lower than a tensile strength of the matrix material in the cured state without fibre reinforcements.

10. Method according to any of Claims 1 to 9, in which a layer thickness of the lining is between 0.5 mm and 20 mm, preferably between 1 mm and 10 mm, further preferably between 2 mm and 5 mm.

11. Method according to any of Claims 1 to 10, in which the application of the curable matrix material is preceded by application of an adhesion promoter to the lining material, wherein the adhesion promoter preferably comprises at least one polyisocyanate and at least one solvent, wherein the mould core is further preferably rotated during the application of the adhesion promoter, wherein the adhesion promoter is preferably pressed onto the lining material by means of a contact pressure device, further preferably by means of a contact pressure roll that runs with the rotating mould core.

12. Method according to any of Claims 1 to 11, in which the applying of the curable matrix material in step b) and the wrapping with a semifinished fibre product in step c) are effected by wrapping a matrix material-impregnated semifinished fibre product onto the mould core.

13. Method according to any of Claims 1 to 11, in which the applying of the curable matrix material to an outer surface of the lining material in step b) and the wrapping with a semifinished fibre product in step c) are effected by applying a layer of the curable matrix material, wherein the application of the semifinished fibre products is followed by embedding into the as yet uncured matrix material, wherein a layer thickness is preferably between 0.2 mm and 3 mm, further preferably between 0.5 mm and 1.5 mm.

14. Method according to any of Claims 1 to 13, in which a wall thickness of the hollow fibre composite body is between 0.5 mm and 50 mm, preferably between 1 mm and 30 mm.

15. Method according to any of Claims 1 to 14, in which an outer surface of the hollow fibre composite body is provided with a coating of polyurea, polyurethane or mixtures thereof, wherein the outer surface, prior to the curing of an outer layer of the matrix material and prior to the application of the coating of polyurea, polyurethane or mixtures thereof, is provided with an adhesion-improving structure, wherein the adhesion-improving structure is further preferably produced by wrapping the outer surface with a tearoff fabric and a subsequent removal of the tearoff fabric.

## Revendications

1. Procédé d'enroulement pour la fabrication d'un corps creux en composite fibreux muni d'un revêtement, comprenant les étapes suivantes :
- application d'un matériau de revêtement durcissable sur un noyau pouvant être entraîné en rotation ;
- application d'un matériau de matrice durcissable sur une face extérieure du revêtement ;
- enroulement d'un semi-produit fibreux pour la fabrication d'un corps creux en composite fibreux, dans lequel le semi-produit fibreux est incorporé dans le matériau de matrice durcissable ;
- séparation du corps creux en composite fibreux muni du revêtement du noyau,
dans lequel le matériau de revêtement forme, après durcissement, un revêtement qui comprend une polyurée, un polyuréthane ou des mélanges de ceux-ci, le matériau de revêtement étant formé à partir d'au moins deux composants de départ qui, pour former un mélange pouvant être coulé, sont mélangés l'un à l'autre et sont coulés sur le noyau, **caractérisé en ce que** le noyau, pendant l'application du matériau de revêtement, est mis en rotation autour de son axe longitudinal.

2. Procédé selon la revendication 1, dans lequel, avant application du matériau de revêtement, on applique sur le noyau une couche de séparation, la couche de séparation comprenant de préférence une feuille de séparation entourant le noyau.

3. Procédé selon l'une des revendications 1 ou 2, dans lequel l'application du matériau de revêtement a lieu de préférence par un déplacement d'au moins un orifice de distribution le long d'une direction longitudinale du noyau.

4. Procédé selon l'une des revendications 1 à 3, dans lequel le matériau de revêtement forme, après le durcissement, un revêtement qui est constitué d'une polyurée, d'un polyuréthane ou de mélanges de ceux-ci.

5. Procédé selon l'une des revendications 1 à 4, dans lequel une pression de coulée des composants de départ mélangés est comprise entre 1 et 100 bar, de préférence entre 2 et 50 bar, plus préférentiellement entre 2 et 20 bar.

6. Procédé selon l'une des revendications 1 à 5, dans lequel les composants de départ coulés sur le noyau sont, à l'aide d'éléments de répartition mécaniques, uniformément répartis sur la surface du noyau.

7. Procédé selon l'une des revendications 1 à 6, dans lequel un temps de séchage d'une couche du matériau de revêtement est compris entre 20 secondes et 360 secondes, de préférence entre 25 secondes et 240 secondes, plus préférentiellement entre 30 secondes et 120 secondes.

8. Procédé selon l'une des revendications 1 à 7, dans lequel une température de distribution des composants de départ est comprise entre 10 °C et 80 °C et de préférence entre 15 et 30 °C.

9. Procédé selon l'une des revendications 1 à 8, dans lequel le matériau de revêtement présente à l'état durci un allongement à la rupture qui est supérieur à un allongement à la rupture du matériau de matrice à l'état durci sans renforcement par des fibres et/ou dans lequel le matériau de revêtement présente à l'état durci une résistance à la traction qui est inférieure à une résistance à la traction du matériau de matrice à l'état durci sans renforcement par des fibres.

10. Procédé selon l'une des revendications 1 à 9, dans lequel une épaisseur de couche du revêtement est comprise entre 0,5 mm et 20 mm, de préférence entre 1 mm et 10 mm, plus préférentiellement entre 2 mm et 5 mm.

11. Procédé selon l'une des revendications 1 à 10, dans lequel, avant application du matériau de matrice durcissable, on applique un promoteur d'adhérence sur le matériau de revêtement, le promoteur d'adhérence comprenant de préférence au moins un polyisocyanate et au moins un solvant, le noyau étant plus préférentiellement mis en rotation pendant l'application du promoteur d'adhérence, le promoteur d'adhérence étant de préférence pressé contre le matériau de revêtement à l'aide d'un dispositif de pressage, plus préférentiellement à l'aide d'un rouleau de pressage tournant en même temps que le noyau en rotation.

12. Procédé selon l'une des revendications 1 à 11, dans lequel l'application du matériau de matrice durcissable selon l'étape b) et l'enroulement du semi-produit fibreux selon l'étape c) ont lieu par enroulement, sur le noyau, d'un semi-produit fibreux imprégné du matériau de matrice.

13. Procédé selon l'une des revendications 1 à 11, dans lequel l'application du matériau de matrice durcissable sur une face supérieure du matériau de revêtement selon l'étape b) et l'enroulement d'un semi-produit fibreux selon l'étape c) sont réalisés par application d'une couche du matériau de matrice durcissable, le semi-produit fibreux étant, après l'application, incorporé dans le matériau de matrice pas encore durci, une épaisseur de couche étant de préférence comprise entre 0,2 mm et 3 mm, plus préférentiellement entre 0,5 mm et 1,5 mm.

14. Procédé selon l'une des revendications 1 à 13, dans lequel une épaisseur de paroi du corps creux en composite fibreux est comprise entre 0,5 mm et 50 mm, de préférence entre 1 mm et 30 mm.

15. Procédé selon l'une des revendications 1 à 14, dans lequel une face extérieure du corps creux en composite fibreux est pourvue d'un revêtement de polyurée, de polyuréthane ou de mélanges de ceux-ci, la face extérieure étant de préférence, avant le durcissement d'une couche extérieure du matériau de matrice et avant application du revêtement de polyurée, de polyuréthane ou de mélanges de ceux-ci, pourvue d'une structure renforçatrice d'adhérence, la structure renforçatrice d'adhérence étant en outre de préférence fabriquée par enroulement sur la face extérieure d'un tissu d'arrachage, et également par un enlèvement, réalisé ensuite, du tissu d'arrachage.
